# EUROPÄISCHE PATENTSCHRIFT

(11) **EP 3 718 673 B1**
(45) Veröffentlichungstag und Bekanntmachung des Hinweises auf die Patenterteilung: **26.07.2023**
(21) Anmeldenummer: 20160828.8
(22) Anmeldetag: 04.03.2020
(51) Int. Cl.: B23K 11/24, H02M 7/00

(54) **GLEICHRICHTER FÜR EINEN SCHWEISSTRANSFORMATOR EINER SCHWEISSVORRICHTUNG UND VERFAHREN ZUM HERSTELLEN EINES SOLCHEN GLEICHRICHTERS**
RECTIFIER FOR A WELDING TRANSFORMER OF A WELDING DEVICE AND METHOD FOR MANUFACTURING SUCH A RECTIFIER
REDRESSEUR POUR UN TRANSFORMATEUR DE SOUDAGE D'UN DISPOSITIF DE SOUDAGE ET PROCÉDÉ DE FABRICATION D'UN TEL REDRESSEUR

(30) Priorität: 04.04.2019 DE 102019204788
(43) Veröffentlichungstag der Anmeldung: 07.10.2020
(73) Patentinhaber: Robert Bosch GmbH, 70442 Stuttgart (DE)
(72) Erfinder: Solar, Anton, 4228 Zelezniki (SI); Thaens, Carmen, 97907 Hasloch (DE); Brohm, Maximilian, 64720 Michelstadt (DE); Herr, Alexander, 64720 Michelstadt (DE)

(56) Entgegenhaltungen:
- CN-U- 203 936 512
- JP-A- H04 253 579

## Beschreibung

Die vorliegende Erfindung bezieht sich auf einen Gleichrichter für einen Schweißtransformator einer Schweißvorrichtung und ein Verfahren zum Herstellen eines solchen Gleichrichters.

Schweißvorrichtungen, wie beispielsweise in der JP H04 253579 A gezeigt, werden beispielsweise in Produktionsanlagen, wie insbesondere Fertigungsstraßen für Fahrzeuge usw., verwendet, um metallische Teile durch Schweißen mit Hilfe eines Schweißwerkzeugs der Schweißvorrichtung zu verbinden. Das Schweißwerkzeug ist beispielsweise eine Schweißzange, die von einem Schweißtransformator mit einem elektrischen Schweißstrom versorgt wird. Insbesondere ist das Schweißwerkzeug ein Widerstandsschweißwerkzeug. Zudem ist die Schweißvorrichtung in der Einzelfertigung einsetzbar. Bei Bedarf ist es möglich, die Schweißvorrichtung zumindest teilweise von Hand zu führen.

Der Schweißtransformator kann vorzugsweise als Mittelfrequenz-Gleichstrom-Transformator (MF-DC-Transformator) ausgeführt sein. Hierfür ist an den Schweißtransformator ein Gleichrichter angebaut. Ein solcher Schweißtransformator wird auch als Transformator-Gleichrichtereinheit bezeichnet.

CN 203 936 512 U zeigt eine Mittelfrequenz-Hochleistungskomponente für eine Widerstandsschweißmaschine.

Durch den Gleichstrom beim Schweißen kann Magnetisierung der geschweißten Teile auftreten. In Folge dessen wird die Weiterverarbeitung der geschweißten metallischen Teile erschwert. Durch die mögliche Magnetisierung von Anlagenteilen kann es zu Verschmutzung und Fehlfunktionen in der Schweißanlage kommen.

Außerdem kann es durch verschiedene Legierungen für die geschweißten Bleche, verschiedene Blechdickenkombinationen und den Peltiereffekt bei Aluminium schweißstromrichtungsabhängig zu unerwünschtem Abbrand an den Schweißelektroden bzw. Materialwanderung kommen.

Diese Effekte treten zudem insbesondere beim Widerstandsschweißen von Kettengliedern und beim Schweißen von Heizkörpern auf.

Zur Vermeidung dieser Effekte ist es möglich, bei dem Schweißtransformator eine Polaritätsumschaltung vorzunehmen. Damit können im Gegensatz zu einem herkömmlichen Diodengleichrichter entstehende störende Magnetisierungseffekte sehr effizient, einfach und kostengünstig vermieden werden.

Eine solche Transformator-Gleichrichtereinheit hat im Vergleich zu dem Diodengleichrichter bessere Betriebseigenschaften, da der Gleichrichter mit vier Thyristoren höhere Verluste und eine geringere Leistung hat. Die schlechteren Betriebseigenschaften sind im Hinblick auf den schonenden Einsatz von Ressourcen unerwünscht. Zudem verursachen die schlechteren Betriebseigenschaften für den Betreiber der Widerstandsschweißvorrichtung höhere Kosten.

Jedoch werden je nach Bedarf Transformator-Gleichrichtereinheiten mit oder ohne Polaritätsumschaltung benötigt. Derzeit sind diese beiden Varianten von der Bauweise sehr verschieden. Dies verursacht einen erhöhten Aufwand bei der Vorhaltung der verschiedenen Bauteile für die Transformator-Gleichrichtereinheiten. Zudem sind Mitarbeiter und/oder Maschinen zur Montage der Transformator-Gleichrichtereinheiten aufwändig für die Montage der verschiedenen Transformator-Gleichrichtereinheiten einzulernen und vorzubereiten.

Daher ist es Aufgabe der vorliegenden Erfindung, einen Gleichrichter für einen Schweißtransformator einer Schweißvorrichtung und ein Verfahren zum Herstellen eines solchen Gleichrichters bereitzustellen, mit welchen die zuvor genannten Probleme gelöst werden können. Insbesondere sollen ein Gleichrichter für einen Schweißtransformator einer Schweißvorrichtung und ein Verfahren zum Herstellen eines solchen Gleichrichters bereitgestellt werden, bei welchen die Herstellung des Gleichrichters und somit der Transformator-Gleichrichtereinheit vereinfacht ist, die je nach Bedarf mit oder ohne Polaritätsumschaltung aufgebaut ist.

Diese Aufgabe wird durch einen Gleichrichter für einen Schweißtransformator einer Schweißvorrichtung nach Anspruch 1 gelöst. Der Gleichrichter hat ein erstes Seitenteil, ein zweites Seitenteil, ein Mittelteil, das zwischen dem ersten und zweiten Seitenteil angeordnet ist, und mindestens zwei Halbleitermodule, die zwischen den Seitenteilen und dem Mittelteil angeordnet sind und zwischen ein Schweißwerkzeug der Schweißvorrichtung und einen Ausgang des Schweißtransformators geschaltet sind, wobei die mindestens zwei Halbleitermodule als Gleichteile ausgestaltet sind, deren Direktsteckverbinder seitlich an dem Halbleitermodul angeordnet ist, so dass bei einer Anordnung von zwei Halbleitermodulen Rücken an Rücken in einer Reihe nebeneinander, die Direktsteckverbinder in einer Richtung quer zu der Reihe nebeneinander angeordnet sind, wie in Anspruch 1 beschrieben.

Der in den Ansprüchen beanspruchte Gleichrichter ist derart aufgebaut, dass verschiedene Varianten des Gleichrichters sehr unaufwändig und mit nahezu minimaler Fehlermöglichkeit montierbar sind. Die Bauteile des Gleichrichters sind derart ausgestaltet, dass bei minimaler Anzahl der Teile dennoch zwei verschiedene Bauvarianten des Gleichrichters umsetzbar sind.

Zudem hat der Gleichrichter Gleichteile für die Halbleiterbausteine, insbesondere MOSFETs. Die Halbleiterbausteine bringen eine wesentliche Energieersparnis gegenüber herkömmlichen Schweißtransformatoren mit sich. Mit der Variante einer Polumschaltung bzw. Polaritätsumschaltung erreichen die Anwender der Transformator-Gleichrichtereinheit große Prozessvorteile.

Die Ausgestaltung der Seitenteile und die Gleichteileverwendung bei dem Gleichrichter optimiert die Kosten für die beiden Transformatorvarianten mit und ohne Polumschaltung, so dass die Montage des Gleichrichters weniger kompliziert ist als bisher. Dadurch wird sowohl die Vorhaltung der Bauteile weniger aufwändig als auch die Schulung von Mitarbeitern und/oder das Einrichten von Maschinen für die Herstellung weniger komplex. Infolgedessen sinkt auch die Fehlerquote in Bezug auf die Herstellung des Gleichrichters. Damit wird die Qualität des Gleichrichters erhöht und der Ausschuss bei der Herstellung verringert. Insgesamt kann dadurch der Resourcenbedarf verringert werden.

Zudem ist der Gleichrichter mit oder ohne Polaritätsumschaltung in seiner äußeren Form und Größe gleich aufgebaut. Dies bewirkt, dass eine Vorrichtung zur Bewegung der Schweißvorrichtung im Raum, wie beispielsweise ein Roboter, nicht für die unterschiedlichen Arten von Transformator-Gleichrichtereinheiten unterschiedlich eingelernt und im Betrieb umgestellt werden muss. Auch dies trägt zur Vereinfachung der Inbetriebnahme, des Betriebs und der Wartung der Schweißanlage bei.

Insgesamt ist der in den Ansprüchen beanspruchte Gleichrichter derart aufgebaut, dass je nach Bedarf eine einfache Polaritätsumschaltung eines Schweißtransformators in kleiner Baugröße und mit geringen Verlusten realisiert werden kann. Jedoch ist der Gleichrichter je nach Bedarf auch später sehr unaufwändig auf die jeweilige andere Variante umrüstbar.

Vorteilhafte weitere Ausgestaltungen des Gleichrichters sind in den abhängigen Ansprüchen angegeben.

Möglich ist, dass entweder von den mindestens zwei Halbleitermodulen zwei Halbleitermodule zusammen zwischen einem der Seitenteile und dem Mittelteil angeordnet sind und als Reihenschaltung aus zwei Transistoren zwischen das Schweißwerkzeug und einen Ausgang des Schweißtransformators geschaltet sind und zwei andere Halbleitermodule zusammen zwischen dem anderen der Seitenteile und dem Mittelteil angeordnet sind und als Reihenschaltung aus zwei Transistoren zwischen das Schweißwerkzeug und einen anderen Ausgang des Schweißtransformators geschaltet sind, oder die mindestens zwei Halbleitermodule jeweils einzeln zwischen einem der Seitenteile und dem Mittelteil angeordnet sind und zwischen das Schweißwerkzeug und einen Ausgang des Schweißtransformators geschaltet sind.

Hierbei ist es denkbar, dass die mindestens zwei Halbleitermodule jeweils mindestens ein Halbleiterbauelement aufweisen, das mindestens einen Transistor aufweist, wobei die Polarität des einen Transistors der Reihenschaltung gegenüber der Polarität des anderen Transistors der Reihenschaltung gedreht ist, um im Falle der Reihenschaltung an dem Schweißtransformator eine polaritätsumschaltbare Schweißspannung und einen polaritätsumschaltbaren Schweißstrom zu realisieren. Hierbei kann der Transistor mit der gedrehten Polarität zur Verbindung mit dem Schweißwerkzeug vorgesehen sein.

In einer Ausgestaltungsvariante sind die Transistoren Metall-Oxid-Halbleiter-Feldeffekttransistoren.

Möglicherweise hat jedes der mindestens zwei Halbleitermodule eine Basisplatte und eine Deckelplatte, die elektronisch und mechanisch miteinander verbunden sind. Zusätzlich oder alternativ kann jedes Halbleitermodul einen Direktsteckverbinder aufweisen, der seitlich aus dem Halbleitermodul auskragt.

Bei dem Gleichrichter kann das erste Seitenteil und das zweite Seitenteil derart asymmetrisch ausgestaltet sein, dass ein Austausch der Anordnung der Seitenteile relativ zum Mittelteil die Anzahl der Halbleitermodule verändert, die zwischen einem der Seitenteile und dem Mittelteil einspannbar sind.

Noch dazu kann der Gleichrichter Befestigungselemente zur Befestigung der Seitenteile am Schweißtransformator aufweisen, wobei die Befestigungselemente an den Seitenteilen derart vorgesehen sind, dass dieselben Befestigungsstellen am Schweißtransformator unabhängig davon verwendbar sind, wie die Seitenteile relativ zum Mittelteil angeordnet sind, damit ein polaritätsumschaltbarer Schweißstrom realisierbar ist oder nicht.

Mindestens ein zuvor beschriebener Gleichrichter kann Teil einer Schweißvorrichtung sein, die zudem ein Schweißwerkzeug mit mindestens einer Schweißelektrode aufweist, welche zum Schweißen mit dem mindestens einen Bauteil zu kontaktieren ist, und mindestens einen Schweißtransformator aufweist zum Zuführen eines elektrischen Stroms zu dem Schweißwerkzeug beim Schweißen des mindestens einen Bauteils. Hierbei kann der mindestens eine Gleichrichter mit dem mindestens einen Schweißtransformator verbunden sein.

Möglich ist, dass der Schweißtransformator zwei Ausgänge hat, an welchen jeweils eine Reihenschaltung aus zwei Transistoren vor das Schweißwerkzeug geschaltet ist.

Die Schweißvorrichtung hat zudem möglicherweise eine Steuereinrichtung zum negativ leitend Einschalten mindestens eines der in Reihe geschalteten Transistoren im Synchronbetrieb bei elektrischem Strom.

Denkbar ist, dass das Schweißwerkzeug eine Schweißzange mit zwei Schweißelektroden ist, zwischen welchen das mindestens eine Bauteil beim Schweißen angeordnet ist.

Die zuvor beschriebene Schweißvorrichtung kann Teil einer Anlage sein, die zur Behandlung von Gegenständen mit der Schweißvorrichtung vorgesehen ist. Hierbei kann die Schweißvorrichtung zum Schweißen von mindestens einem Bauteil vorgesehen sein, wie in Anspruch 13 beschrieben. Hierbei ist die Anlage zur Fertigung von Fahrzeugrohkarossen oder Heizkörpern oder Ketten als Gegenstände ausgestaltbar.

Die Aufgabe wird zudem durch ein Verfahren zum Herstellen eines Gleichrichters für einen Schweißtransformator einer Schweißvorrichtung nach Anspruch 15 gelöst. Das Verfahren hat die Schritte: Anordnen eines Mittelteils zwischen einem ersten und zweiten Seitenteil und von mindestens je einem Halbleitermodul zwischen dem Mittelteil und dem ersten und zweiten Seitenteil, wobei die mindestens zwei Halbleitermodule als Gleichteile ausgestaltet sind, deren Direktsteckverbinder seitlich an dem Halbleitermodul angeordnet ist, so dass bei einer Anordnung von zwei Halbleitermodulen Rücken an Rücken in einer Reihe nebeneinander, die Direktsteckverbinder in einer Richtung quer zu der Reihe nebeneinander angeordnet sind, und elektrisch Verbinden der mindestens zwei Halbleitermodule zwischen ein Schweißwerkzeug und einen Ausgang des Schweißtransformators, wie in Anspruch 15 beschrieben.

Das Verfahren erzielt die gleichen Vorteile, wie sie zuvor in Bezug auf den Gleichrichter genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen im Rahmen der angehängten Ansprüche. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Anlage mit einer Schweißvorrichtung gemäß einem ersten Ausführungsbeispiel;
Fig. 2 eine dreidimensionale Ansicht eines Gleichrichters für einen Schweißtransformator mit Polaritätsumschaltung gemäß dem ersten Ausführungsbeispiel;
Fig. 3 eine dreidimensionale Ansicht eines Halbleitermoduls für den Gleichrichter gemäß dem ersten Ausführungsbeispiel;
Fig. 4 eine dreidimensionale Ansicht eines Halbleitermodul-Packs, der aus mehreren Halbleitermodulen von Fig. 3 gebildet ist, für den Gleichrichter gemäß dem ersten Ausführungsbeispiel;
Fig. 5 eine dreidimensionale Ansicht der Anordnung von Halbleitermodul-Packs an Platinen für den Gleichrichter gemäß dem ersten Ausführungsbeispiel;
Fig. 6 eine dreidimensionale Ansicht eines Schweißtransformators ohne Polaritätsumschaltung für eine Widerstandsschweißvorrichtung gemäß einem zweiten Ausführungsbeispiel;
Fig. 7 eine dreidimensionale Ansicht der Anordnung von Halbleitermodul-Packs an Platinen für den Gleichrichter gemäß dem zweiten Ausführungsbeispiel; und
Fig. 8 ein Blockschaltbild einer Anlage mit einer Widerstandsschweißvorrichtung gemäß einem dritten Ausführungsbeispiel.

In den Figuren sind gleiche oder funktionsgleiche Elemente, sofern nichts anderes angegeben ist, mit denselben Bezugszeichen versehen.

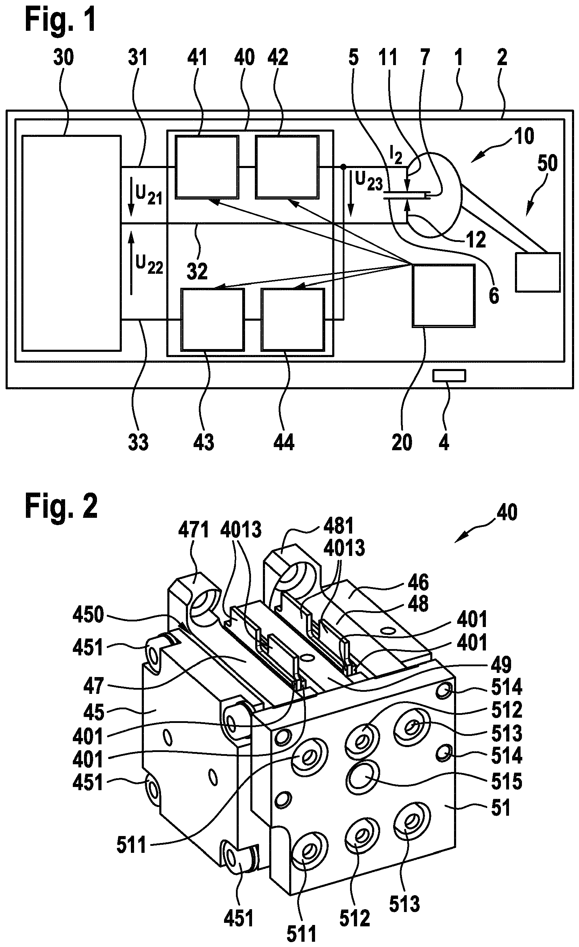

Fig. 1 zeigt sehr schematisch eine Anlage 1 mit einer Schweißvorrichtung 2, die insbesondere eine Widerstandsschweißvorrichtung ist. Die Anlage 1 ist beispielsweise eine Fertigungsanlage für Gegenstände 4, wie Fahrzeuge, Möbel, Heizkörper, usw..

In der Anlage 1 sind metallische Bauteile 5, 6 durch Schweißen, insbesondere Widerstandsschweißen, derart verbindbar, dass eine Schweißverbindung 7 hergestellt wird. Hierzu weist die Schweißvorrichtung 2 ein Schweißwerkzeug 10 in Form einer Schweißzange mit zwei Schweißelektroden 11, 12, eine Steuereinrichtung 20, einen Schweißtransformator 30 mit drei Ausgängen 31, 32, 33 und einen Gleichrichter 40 aus einem ersten Transistor 41, einem zweiten Transistor 42, einem dritten Transistor 43 und einem vierten Transistor 44 auf. Bei dem Beispiel von Fig. 1 hat die Schweißvorrichtung 2 zudem eine Vorrichtung 50 zum Führen des Schweißwerkzeugs 10.

Der Schweißtransformator 30 ist vorzugsweise als Mittelfrequenz-Gleichstrom-Transformator (MF-DC-Transformator) ausgeführt. Hierbei ist der Gleichrichter 40 an den Schweißtransformator 30 angebaut. Somit liegt eine Transformator-Gleichrichtereinheit vor.

Die Schweißvorrichtung 2 kann unter Steuerung der Steuereinrichtung 20 mit dem Schweißwerkzeug 10 eine Schweißverbindung 7 herstellen.

Es ist hierbei möglich, dass beispielsweise zwei Kanten oder Ränder oder Ecken eines einzigen Bauteils 5 durch Widerstandsschweißen mit einer oder mehreren Schweißverbindungen 7 miteinander verbunden werden. Unabhängig davon wie viele Bauteile 5, 6 mit einer Schweißverbindung 7 miteinander verbunden werden, ist/sind die Schweißverbindung(en) 7 als Punktschweißung oder Schweißnaht oder Kombinationen daraus ausführbar.

An der Sekundärseite des Schweißtransformators 30 liegt eine erste Sekundärspannung U21 zwischen dem ersten und zweiten Ausgang 31, 32 des Schweißtransformators 30 an. Außerdem liegt eine zweite Sekundärspannung U22 zwischen dem zweiten und dritten Ausgang 32, 33 des Schweißtransformators 30 an. Die erste Sekundärspannung U21 und die zweite Sekundärspannung U22 bilden nach der Gleichrichtereinheit 40 eine Schweißspannung U23, welche einen Schweißstrom I2 zur Folge hat.

An dem ersten Ausgang 31 des Schweißtransformators 30 ist der erste Transistor 41 angeschlossen. Zu dem ersten Transistor 41 ist ein zweiter Transistor 42 in Reihe geschaltet. Dadurch ist die Reihenschaltung aus erstem und zweitem Transistor 41, 42 zwischen den Schweißtransformator 30 und das Schweißwerkzeug 10 geschaltet. Genauer gesagt, ist die Reihenschaltung aus erstem und zweitem Transistor 41, 42 zwischen den Schweißtransformator 30 und die erste Schweißelektrode 11 geschaltet.

Mit dem zweiten Ausgang 32 des Schweißtransformators 30 ist die zweite Schweißelektrode 12 direkt verbunden.

An dem dritten Ausgang 32 des Schweißtransformators 30 ist der dritte Transistor 43 angeschlossen. Zu dem dritten Transistor 43 ist ein vierter Transistor 44 in Reihe geschaltet. Dadurch ist die Reihenschaltung aus drittem und viertem Transistor 43, 44 zwischen den Schweißtransformator 30 und das Schweißwerkzeug 10 geschaltet. Genauer gesagt, ist die Reihenschaltung aus drittem und viertem Transistor 43, 44 zwischen den Schweißtransformator 30 und die erste Schweißelektrode 11 geschaltet.

Die Steuereinrichtung 20 kann auch die Polarität der Schweißspannung U23 an Schweißelektrode 11 und 12 durch entsprechende Steuerung der Transistoren 41, 42, 43, 44 wie gewünscht schalten. Die Steuereinrichtung 20 ist ausgestaltet, jeweils in Abhängigkeit der Ausgangsspannung und der Polaritätsvorwahl einen Transistor der Transistoren 41, 42, 43, 44 einzuschalten. Der in Reihe geschaltete Transistor der Transistoren 41, 42, 43, 44 wird im Synchronbetrieb bei Strom dann negativ leitend eingeschaltet.

Beispielsweise schaltet die Steuereinrichtung 20 den ersten Transistor 41 jeweils in Abhängigkeit der Ausgangsspannung und der Polaritätsvorwahl ein. Der in Reihe geschaltete zweite Transistor 42 wird im Synchronbetrieb bei Strom dann negativ leitend eingeschaltet. In diesem Fall ist der Schweißstrom I2 ein positiv aus der Elektrode 11 herausfließender Strom. Die Elektrode 11 ist dann positiv gepolt. Die Elektrode 12 ist dann negativ gepolt.

Soll der Schweißstrom I2 anders herum gepolt sein, wird mit den jeweils anderen Transistoren 42, 44 eine Polaritätsvorwahl getroffen und werden die zugehörigen Transistoren negativ leitend geschaltet.

Dadurch sind im Gleichrichter 40 pro Gleichrichterzweig dann zwei Transistoren, nämlich bei dem Beispiel die Transistoren 41, 42, in Reihe eingeschaltet. Dasselbe gilt in gleicher Weise für die Reihenschaltung aus drittem und viertem Transistor 43, 44 als weiteren Gleichrichterzweig des Gleichrichters 40.

Auf diese Weise kann an dem Schweißtransformator 30 eine polaritätsumschaltbare Schweißspannung U23 zwischen den Schweißelektroden 11, 12 und ein polaritätsumschaltbarer Schweißstrom I2 realisiert werden.

Bei einem Schweißverfahren zum Schweißen, insbesondere Widerstandsschweißen, von mindestens einem Bauteil 5, 6 mit der Schweißvorrichtung 2 kontaktiert mindestens eine Schweißelektrode 11, 12 mindestens ein Bauteil 5, 6 und es wird mindestens ein Schweißtransformator 30 verwendet, um einen elektrischen Strom zu dem Schweißwerkzeug 30 beim Schweißen des mindestens einen Bauteils 5, 6 zuzuführen. Hierbei ist für die Polumschaltung eine Reihenschaltung aus zwei Transistoren 41, 42; 43, 44 vorgesehen, die zwischen das Schweißwerkzeug 10 und einen Ausgang 31, 33 des Schweißtransformators 30 geschaltet sind, wie in Fig. 1 gezeigt. Bei dem Schweißverfahren wird der Schritt durchgeführt eines Auswählens der Polarität der zwei Transistoren 41, 42; 43, 44, indem in Abhängigkeit der Ausgangsspannung des Schweißtransformators 30 und der Polaritätsvorwahl ein Transistor aus dem Paar 41, 42 oder ein Transistor aus dem Paar 43, 44 eingeschaltet wird. Außerdem wird der Schritt eines negativ leitend Einschaltens des in Reihe zu dem eingeschalteten Transistor 41 oder 42; 43 oder 44 geschalteten Transistors 41 oder 42; 43 oder 44 im Synchronbetrieb bei Strom durchgeführt. Dadurch ist die Polarität des einen Transistors 42; 44 der Reihenschaltung gegenüber der Polarität des anderen Transistors 41; 43 der Reihenschaltung gedreht, um an dem Schweißtransformator 30 eine polaritätsumschaltbare Schweißspannung U23 und einen polaritätsumschaltbaren Schweißstrom I2 zu realisieren.

Der Transistor mit der gedrehten Polarität kann zur Verbindung mit dem Schweißwerkzeug 10 vorgesehen sein. Genauer gesagt, werden bei dem Gleichrichter 40 beide Reihenschaltungszweige zusammengeführt und dann auf das Schweißwerkzeug 10 geführt.

Die Schweißvorrichtung 2 ist besonders vorteilhaft bei Blechkombinationen einsetzbar, bei welchen es bei einer Schweißzange zum unerwünschtem Abbrand der Schweißelektroden oder Materialwanderung kommt. Außerdem kann die Widerstandsschweißvorrichtung 3 besonders vorteilhaft beim Schweißen von Kettengliedern und beim Schweißen von Heizkörpern verwendet werden.

Fig. 2 zeigt den mechanischen Aufbau des Gleichrichters 40 gemäß dem vorliegenden Ausführungsbeispiel an einer Montageaufnahmeeinheit 51 der Vorrichtung 50 genauer. Die Montageaufnahmeeinheit 51 ist der Ausgang zur Schweißelektrode 11.

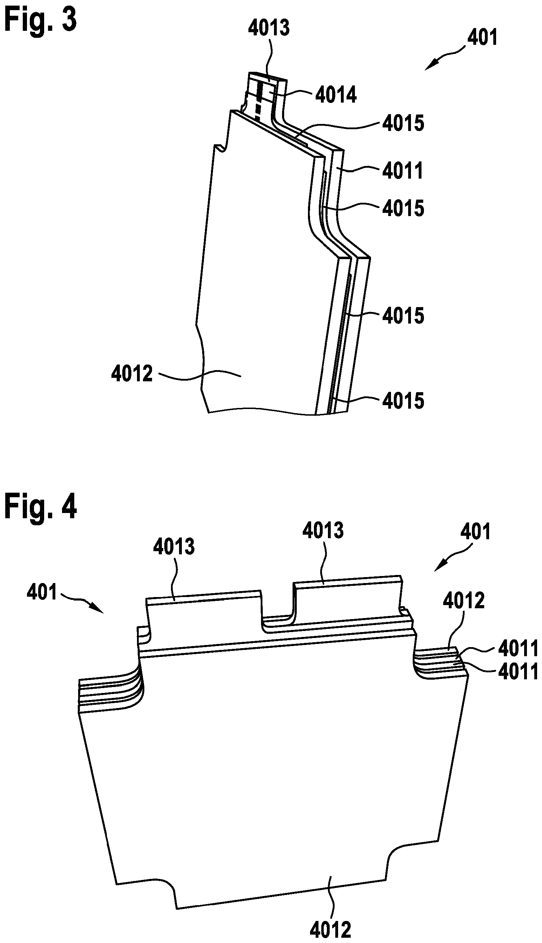

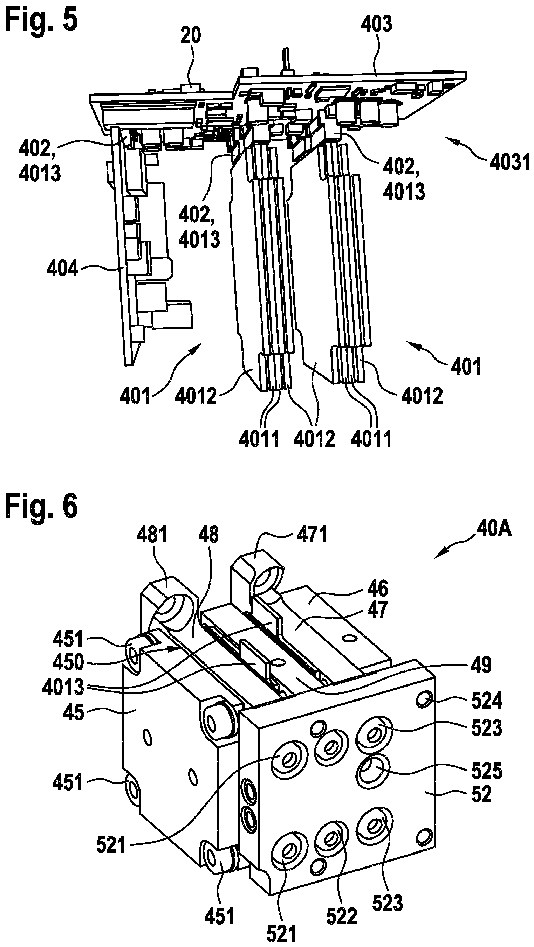

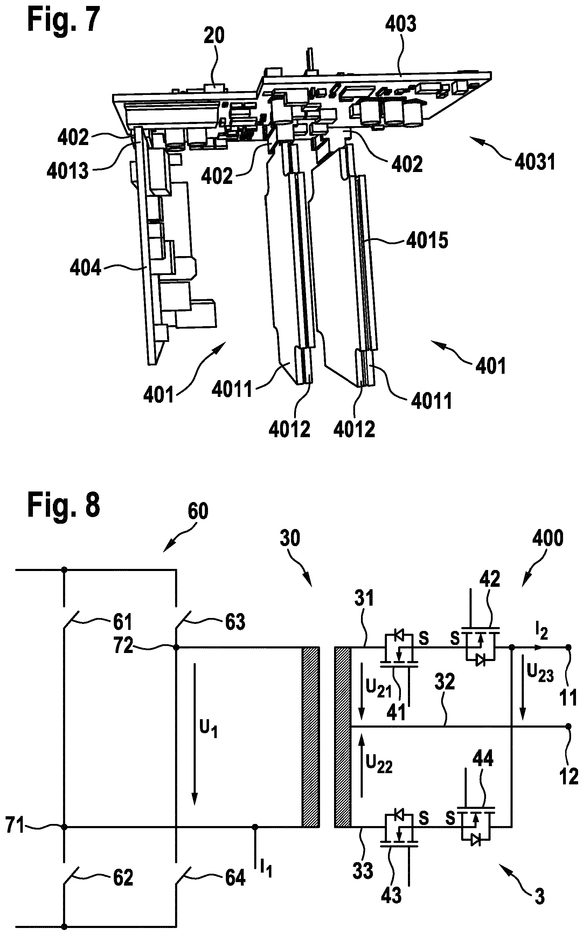

Der Gleichrichter 40 hat eine erste Druckplatte 45, eine zweite Druckplatte 46, ein A-Seitenteil 47, ein B-Seitenteil 48 und ein Mittelteil 49. Zwischen dem A-Seitenteil 47 und dem Mittelteil 49 sind zwei Halbleitermodule 401 angeordnet. Zwischen dem B-Seitenteil 48 und dem Mittelteil 49 sind ebenfalls zwei Halbleitermodule 401, angeordnet. In Fig. 2 sind nur jeweils Direktsteckverbinder 4013 von Halbleitermodulen 401 sichtbar. Diese sind in Fig. 3 und Fig. 4 gezeigt und nachfolgend noch genauer beschrieben. Mit dem Gleichrichter 40 ist die Funktion mit Polumschaltung bzw. Polaritätsumschaltung realisierbar, wie zuvor anhand von Fig. 1 beschrieben. Ohne Polumschaltung sind nur zwei Module 401 vorhanden, was nachfolgend noch in Bezug auf Fig. 6 und Fig. 7 ausführlicher beschrieben ist.

Gemäß Fig. 2 hat der Gleichrichter 40 eine Sandwichbauweise, bei welcher das Mittelteil 49 zwischen dem A-Seitenteil 47 und dem B-Seitenteil 48 angeordnet ist. Zudem ist die Kombination aus Teilen 47, 49, 48 zwischen dem A-Seitenteil 47 und dem B-Seitenteil 48 angeordnet. Somit sind die erste Druckplatte 45, das A-Seitenteil 47, das Mittelteil 49, das B-Seitenteil 48 und die zweite Druckplatte 46 in der genannten Reihenfolge nacheinander oder nebeneinander angeordnet. Die genannte Kombination 45, 47, 49, 48, 46 ist mit Befestigungselementen 451 aneinander befestigt. Die Befestigungselemente 451 sind durch die Kombination 45, 47, 49, 48, 46 hindurchgesteckt. Hierbei kann insbesondere zumindest eines der Befestigungselemente 451 eine Schraube sein, die in ein nicht sichtbares Gewinde der Druckplatte 46 eingeschraubt ist. Alternativ kann mindestens eines der Befestigungselemente 451 eine Schraube sein, die in eine in der Druckplatte 46 aufgenommene Mutter eingeschraubt ist.

Die Seitenteile 47, 48 sind als elektrisch leitfähige Platten, insbesondere Kupferplatten, usw. ausgeführt. Selbstverständlich ist ein anderes elektrisch leitfähiges Material, insbesondere Metall, für die Seitenteile 47, 48 verwendbar. Die Seitenteile 47, 48 können auch als Transformator-Wechselspannungs-Kupferplatten bezeichnet werden.

Das Mittelteil 49 ist aus einem elektrisch leitfähigen Material hergestellt. Das Mittelteil 49 ist leitfähig an der Montageaufnahmeeinheit 51 befestigt, insbesondere verschraubt, und ist somit Teil des Stromausgangs in Richtung der Schweißelektrode 11. Die Seitenteile 47, 48, die wie zuvor beschrieben aus einem leitfähigen Material bestehen, werden isoliert an der Montageplatte 51 befestigt, insbesondere verschraubt, wie in Fig. 2 dargestellt. Die Druckplatten 45, 46 sind bei dem vorliegenden Beispiel aus einem leitfähigen Material hergestellt. Die Druckplatten 45, 46 sind durch Isolationsscheiben 450 von den benachbarten Seitenteilen 47, 48 isoliert. Möglich ist alternativ, dass die Druckplatten 45, 46 aus einem nicht elektrisch leitfähigen Material hergestellt sind, so dass die Isolationsscheiben 450 entfallen können. Anders gesagt, ist zwischen dem Seitenteil 47 und der Druckplatte 45 eine Isolationsscheibe 450 angeordnet. Genauso ist zwischen dem Seitenteil 48 und der Druckplatte 46 eine Isolationssscheibe 450 zur kontaktlosen Montage vorgesehen, auch wenn die Isolationssscheibe 450 in Fig. 2 nicht sichtbar ist.

Die Seitenteile 47, 48 und das Mittelteil 49 sind mittels Befestigungselementen 511 bis 513 an der Montageaufnahmeeinheit 51 befestigt. Dabei sind die Seitenteile 47, 48, egal ob sie links oder rechts oder umgekehrt relativ zum Mittelteil 49 platziert sind, mittels einer Isolation, die insbesondere als mindestens eine Isolationsscheibe ausgeführt ist, an der Montageaufnahmeeinheit 51 befestigt. Die Befestigungselemente 511 bis 513 sind bei dem Beispiel von Fig. 2 Schrauben, die in Öffnungen der Seitenteile 47, 48, des Mittelteils 49 und der Montageaufnahmeeinheit 51 befestigt sind. Die Befestigungselemente 511 und 513 benötigen aufgrund der benötigten Isolation zwischen den Seitenteilen 47, 48 und der Montageaufnahmeeinheit 51 eine zusätzliche Isolationsscheibe 450 zur kontaktlosen und dennoch festen Montage der einzelnen Teile 47, 48, 49.

Die Öffnungen 514 dienen zur Befestigung von weiteren leitfähigen Platten, insbesondere Kupferplatten, usw., die dann die Ausprägung der Anschlüsse des fertigen Transformators 30 bilden. Die Öffnungen 514 können ein Innengewinde in der Montageaufnahmeeinheit 51 aufweisen.

Zudem weist die Montageaufnahmeeinheit 51 eine Öffnung 515 auf, die für eine Kühlung des Gleichrichters 40 verwendbar ist. Zur Kühlung kann als Kühlmedium ein flüssiges oder gasförmiges Medium, insbesondere Wasser, Öl, oder Luft, usw., zum Einsatz kommen.

Die Seitenteile 47, 48 haben eine unsymmetrische Dicke, um je mindestens ein oder mehr Halbleitermodule 401 zu verspannen. Somit sind bei dem Gleichrichter 40 gemäß Fig. 2 die Seitenteile 47, 48 jeweils asymmetrisch ausgestaltet. In Fig. 2 sind die Seitenteile 47, 48 derart angeordnet, dass von den Seitenteilen 47, 48 die zwei Halbleitermodule 401 verspannt werden können, wie zuvor erwähnt. Hierfür ist das A-Seitenteil 47 in Fig. 2 auf der linken Seite des Mittelteils 49 angeordnet. Außerdem ist das B-Seitenteil 48 in Fig. 2 auf der rechten Seite des Mittelteils 49 angeordnet.

An dem A-Seitenteil 47 ist mindestens ein Befestigungselement 471 vorgesehen, mit welchem der Transformator 30 an dem Gleichrichter 40 leitfähig befestigbar ist, insbesondere mittels einer Schraube anschraubbar ist. An dem B-Seitenteil 48 ist mindestens ein Befestigungselement 481 vorgesehen, mit welchem der Transformator 30 an dem Gleichrichter 40 leitfähig befestigbar ist, insbesondere mittels einer Schraube anschraubbar ist. Beispielsweise können unten an dem Gleichrichter 40A in Fig. 6 an dem Seitenteil 47 ein Befestigungselement 471 und an dem Seitenteil 48 ein Befestigungselement 481 vorgesehen sein, die in Fig. 6 nicht sichtbar sind.

Bei dem Gleichrichter 40 sind die Befestigungselemente 511 bis 514 in Form von Schrauben und/oder Nieten an der Montageplatte 51 derart vorgesehen, dass die Seitenteile 47, 48 und das Mittelteil 49 für beide Montagevarianten der Seitenteile 47, 48 an einer der Montageaufnahmeeinheiten 51, 52 befestigbar sind. Die andere Montagevariante ist nachfolgend in Bezug auf Fig. 5 und Fig. 6 beschrieben.

Alternativ ist es möglich, als Befestigungselemente 471, 481 und/oder 511 bis 513 eine Langlochlösung zu verwenden, um eine Montage der Seitenteile 47, 48 für zwei unterschiedliche Positionen zu realisieren. Die andere Position ist in Bezug auf Fig. 5 noch ausführlicher beschrieben. Gemäß einer anderen Alternative sind zwei oder mehr Schraublöcher im Transformator 30 verwendbar. Außerdem sind, auch wenn die Befestigungselemente 511, 513 und die Seitenteile 47, 48 Langlöcher als Befestigungsöffnungen besitzen, am Transformator 30 für die Transformatorvariante von Fig. 3 bis Fig. 5 (mit Polumschaltung) und für die Transformatorvariante von Fig. 6 bis Fig. 8 (ohne Polumschaltung) dennoch dieselben Befestigungsöffnungen verwendbar.

Fig. 3 zeigt vereinfacht den mechanischen Aufbau eines Halbleitermoduls 401 das die Parallelschaltung von mehreren Halbleiterbauteilen 4015, insbesondere Transistoren, aufweist. Die Parallelschaltung bildet einen der Transistoren 41 bis 44 für den Gleichrichter 40 von Fig. 1. Das Halbleitermodul 401 hat eine Basisplatte 4011 und eine Deckelplatte 4012. Zudem ist ein Direktsteckverbinder 4013 an der Basisplatte 4011 vorgesehen.

Sowohl die Basisplatte 4011 als auch die Deckelplatte 4012 sind aus einem hochleitfähigen Material hergestellt, das thermisch und elektrisch hochleitfähig ist. Auf der Basisplatte 4011 ist eine zusätzliche Metalllage 4014, insbesondere Kupferlage, usw., aufgebracht, die durch ein Isolationsmaterial von der Basisplatte 4011 isoliert ist. Die zusätzliche Metalllage 4014, insbesondere Kupferlage, usw., wird durch in der Leiterplattenfertigung übliche Verfahren aufgebracht. Selbstverständlich sind zum Aufbringen andere Verfahren denkbar.

Zwischen der Basisplatte 4011 und der Deckelplatte 4012 werden dann die Halbleiterbauelemente 4015 mittels Lötverfahren im Sandwichaufbau eingebracht und mit den entsprechenden Platten 4011, 4012 und Leitungen und/oder Anschlüssen für Signale kontaktiert. Der Übersichtlichkeit halber sind in Fig. 3 nicht alle Halbleiterbauelemente 4015 mit einem Bezugszeichen versehen.

Das Modul 401 nimmt somit die Parallelschaltung der Transistoren bzw. Halbleiterelemente 4015 zwischen der Basisplatte 4011 und der Deckelplatte 4012 auf. Im Zwischenraum zwischen der Basisplatte 4011 und der Deckelplatte 4012 ist eine Vielzahl von, beispielsweise zwischen 30 und 50, Halbleiterbauelementen 4015 parallel geschaltet. Beispielsweise weisen die Halbleiterbauelemente 4015 Metall-Isolator-Feldeffekttransistoren (MISFETs), insbesondere Metall-Oxid-Feldeffekttransistoren (MOSFETs), auf, deren Typ je nach Anwendung wählbar ist.

Das Modul 401 ist zumindest teilweise, insbesondere rundum, vergoldet, um die Leitfähigkeit an dem Anschluss, der mit dem Direktsteckverbinder 4013 realisiert ist, und/oder an Anschlüssen der Parallelschaltung der Halbleiterbauelemente 4015 an der Basisplatte 4011 und der Deckelplatte 4012 zu erhöhen.

Wie in Fig. 4 gezeigt, können zwei der Halbleitermodule 401 Rücken an Rücken als Halbleitermodul-Pack angeordnet werden. In diesem Fall sind die Basisplatten 4011 der beiden Halbleitermodule 401 aneinander angeordnet.

Wie in Fig. 5 gezeigt, ist je ein Direktsteckverbinder 4013 in einen Steckverbinder 402 steckbar, um das Halbleitermodul 401 mit einer Treiberplatine 403 zu verbinden. In Fig. 4 sind der Übersichtlichkeit halber nicht alle Steckverbinder 402 mit einem Bezugszeichen versehen.

Gemäß Fig. 3 bis Fig. 5 hat das Halbleitermodul 401 eine kreuzförmige Form, deren Ecken jeweils ausgespart sind, so dass die Befestigungselemente 451 jeweils in der dadurch gebildeten Aussparung des Halbleitermoduls 401 durch den Gleichrichter 40 geführt werden können. Dadurch hat das Halbleitermodul 401, und somit auch dessen Basisplatte 4011 in etwa eine Kreuzform. Außerdem hat die Deckelplatte 4012 bei dem Beispiel von Fig. 3 bis Fig. 5 in etwa eine Kreuzform. Insbesondere sind die Basisplatte 4011 und die Deckelplatte 4012 als symmetrisches Kreuz geformt, wie in Fig. 4 am besten sichtbar. An einer Seite bzw. Kante des Kreuzes kragt der Direktsteckverbinder 4013 seitlich nach außen aus. Insbesondere kragt der Direktsteckverbinder 4013 aus der Basisplatte 4011 aus. Die Deckelplatte 4012 ist optional in Bezug auf die Fertigung an einer Seite verkürzt. Dadurch kann ein Verdrehen der Deckelplatte 4012 bei der Fertigung des Moduls 401 ausgeschossen werden.

Bei dem Halbleitermodul 401 werden nach Aufbringung und Strukturierung der zusätzlichen Metalllage 4014 durch ein in der Leiterplattenherstellung übliches Verfahren, die Halbleiterbauelemente 4015, insbesondere zwischen 30 und 50 Stück inklusive eventuell benötigter passiver Bauelemente, durch in der Leitplattenbestückung übliche Verfahren bestückt. Die elektrische Verbindung zwischen der Basisplatte 4011, welche die Basisgrundplatte und die zusätzlich aufgebrachte Metalllage 4014, insbesondere Kupferlage, aufweist, und den zuvor genannten Bauelementen 4015 wird beispielsweise durch ein Lötverfahren hergestellt. Alternativ oder zusätzlich sind hierfür Verfahren, wie Ultraschallschweißen oder jegliche andere Verfahren zur Herstellung elektrischer Verbindungen, denkbar. Ebenso wird die Deckelplatte 4012 mit den Halbleiterbauelementen 4015 durch ein Lötverfahren und/oder ein anderes Verfahren verbunden.

Es befinden sich somit im Spalt zwischen der Basisplatte 4011 und der Deckelplatte 4012 Halbleiterbauelemente 4015, wie Transistoren, insbesondere MOS-FET einer bestimmten Bauform einschließlich eventuell benötigter passiver und aktiver Bauelemente. Die Halbleiterbauelemente 4015 werden elektrisch sowohl über die Basisplatte 4011 (Source-Anschluss und Gate-Anschluss der Transistoren, Gate-Anschluss über die zusätzlich aufgebrachte Metalllage 4014) als auch über die Deckelplatte 4012 adaptiert. Eine Ansteuerung und Überwachung findet über den Direktsteckverbinder 4013 statt. Der Direktsteckverbinder 4013 adaptiert die Oberseite (zusätzlich aufgebrachte Metalllage 4014) und die Unterseite (Grundplatte) der Basisplatte 4011.

Wie aus Fig. 5 zu sehen, ist jeweils eins der Halbleitermodule 401 mit einem Steckverbinder 402 an der Treiberplatine 403 angeschlossen. Hierfür sind die Halbleitermodule 401 in Fig. 5 Rücken an Rücken aneinandergelegt, so dass die Direktsteckverbinder 4013 und damit die Steckverbinder 402 nebeneinander angeordnet werden können. Hierbei sind die Halbleitermodule 401 in einer Reihe nebeneinander angeordnet. Die Direktsteckverbinder 4013 sind daher in einer Richtung quer zu der Reihe nebeneinander angeordnet. Anders ausgedrückt, die Direktsteckverbinder 4013 sind an der Treiberplatine 403 diagonal versetzt angeordnet.

An der Treiberplatine 403 von Fig. 5 kann auch die Steuereinrichtung 20 angeordnet sein. Zudem ist die Treiberplatine 403 mit einer Netzteilplatine 404 verbunden, welche für die Stromversorgung der Treiberplatine 403 und damit der Halbleitermodule 401 sorgt. Auch die Netzteilplatine 404 kann mittels eines Direktsteckverbinders 4013 und eines Steckverbinders 402 elektrisch mit der Treiberplatine 403 verbunden sein. Die Netzteilplatine 404 kann entfallen, wenn die daran vorgesehene Netzteileinheit auf der Treiberplatine 403 angeordnet ist. In diesem Fall kann auch der zugehörige Direktsteckverbinder 402 für die Netzteilplatine 404 weggelassen werden.

Somit sind die Halbleitermodule 401 jeweils gleich, insbesondere identisch, ausgestaltet. Daher können die Halbleitermodule 401 auch als Gleichteile bezeichnet werden.

Die Halbleitermodule 401 haben jeweils mindestens einen Feldeffekttransistor, der insbesondere ein Feldeffekttransistor, insbesondere ein NMOS-FET ist. Somit können die Module 401 auch IGFET-Module genannt sein. Die IGFET-Module können insbesondere mindestens einen Metall-Oxid-Halbleiter-Feldeffekttransistoren (metal-oxide-semiconductor field-effect transistor = MOSFET) aufweisen.

Der Steckverbinder 402 zum Anschluss an die Treiberplatine 403, der als Direktstecker ausgestaltet sein kann, ist exzentrisch an den Halbleitermodulen 401 angeordnet. Dadurch sind zwei Halbleitermodule 401 mit ihrer Basisplatte 4011 gegeneinander durch eine Leiterplatte der Treiberplatine 403 kontaktierbar. Die Treiberplatine 403 mit einem Treiber 4031 und die Steuereinrichtung 20 sind derart aufgebaut, das je nach Bestückvariante beide Funktionen des Gleichrichters 40 mit oder ohne Polumschaltung bzw. Polaritätsumschaltung realisiert werden können.

Fig. 6 zeigt den mechanischen Aufbau eines Gleichrichters 40A ohne Polumschaltung bzw. Polaritätsumschaltung. Der Gleichrichter 40A ist in vielen Teilen auf die gleiche Weise aufgebaut, wie zuvor in Bezug auf das vorangehende Ausführungsbeispiel mit Polumschaltung für den Gleichrichter 40 beschrieben.

Im Unterschied zu dem vorangehenden Ausführungsbeispiel sind bei dem Gleichrichter 40A von Fig. 6 die Seitenteile 47, 48 relativ zum Mittelteil 49 vertauscht angeordnet. Dadurch ist das A-Seitenteil 47 in Fig. 6 nun auf der rechten Seite des Mittelteils 49 angeordnet. Außerdem ist das B-Seitenteil 48 in Fig. 6 nun auf der linken Seite des Mittelteils 49 angeordnet. Dadurch können bei der Ausführung von Fig. 6 insgesamt nur zwei Halbleitermodule 401 vorgesehen sein. Hierbei ist zwischen dem A-Seitenteil 47 und dem Mittelteil 49 nur ein Halbleitermodul 401 angeordnet. Zwischen dem B-Seitenteil 48 und dem Mittelteil 49 ist ebenfalls nur ein Halbleitermodul 401 angeordnet. Somit sind in Fig. 6 nur zwei Direktsteckverbinder 4013 der Halbleitermodule 401 für die Steckverbinder 402 sichtbar.

Als Folge davon wird bei dem Gleichrichter 40A nur durch Vertauschen der Seitenteile 47, 48 das Weglassen von zwei Halbleitermodulen 401 erzwungen. Dadurch wird die Funktion ohne Polumschaltung bzw. Polaritätsumschaltung realisierbar, wie bereits zuvor in Bezug auf das vorangehende Ausführungsbeispiel erwähnt.

Somit werden in die Treiberplatine 403 nur zwei Halbleitermodule 401 gesteckt, wie in Fig. 7 veranschaulicht. Infolgedessen ist die Treiberplatine 403, im Gegensatz zu der vollen Bestückung gemäß Fig. 5, bei der Funktion ohne Polumschaltung nicht voll bestückt, da bei der Funktion ohne Polumschaltung nur zwei Halbleitermodule 401 gesteckt werden und somit auch nur zwei Module angesteuert werden müssen. Bei der Variante ohne Polumschaltung von Fig. 6 werden nur die Transistoren 42, 44 von Fig. 1 benötigt. Alternativ sind nur die Transistoren 41, 43 von Fig. 1 verwendbar.

Durch asymmetrische Konstruktion der Seitenteile 47, 48 können mittels Vertauschen der Seitenteile 47, 48 zwei oder vier Halbleitermodule 401 (Polumschaltung bzw. Polaritätsumschaltung) verwendet werden und dennoch die gleichen Anschraubpunkte am Transformator 30 verwendet werden.

Im Unterschied zu der Montageaufnahmeeinheit 51 des Gleichrichters 40 von Fig. 2 ist der Ausgang zur Schweißelektrode 11 bei dem Gleichrichter 40A von Fig. 6 mit einer Montageaufnahmeeinheit 52 gebildet. Die Montageaufnahmeeinheit 52 des Gleichrichters 40A von Fig. 6 ist das einzige Teil, das sich von dem Gleichrichter 40 von Fig. 2 unterscheidet.

Auch bei dem Gleichrichter 40 sind Befestigungselemente 521 bis 524 in Form von Schrauben und/oder Nieten an der Montageaufnahmeeinheit 52 vorgesehen. Zudem weist die Montageaufnahmeeinheit 52 eine Öffnung 525 auf, die für eine Kühlung des Gleichrichters 40A verwendbar ist. Zur Kühlung kann als Kühlmedium ein flüssiges oder gasförmiges Medium, insbesondere Wasser, Öl, oder Luft, usw., zum Einsatz kommen.

Gemäß Fig. 6 sind bei dem Gleichrichter 40A somit die Seitenteile 47, 48 und das Mittelteil 49 mittels Befestigungselementen 521 bis 523 an der Montageaufnahmeeinheit 52 befestigt. Dabei sind die Seitenteile 47, 48, egal ob sie links oder rechts oder umgekehrt relativ zum Mittelteil 49 platziert sind, mittels einer Isolation, die insbesondere als mindestens eine Isolationsscheibe 450 ausgeführt ist, an der Montageaufnahmeeinheit 52 befestigt. Die Befestigungselemente 521 bis 523 sind bei dem Beispiel von Fig. 2 Schrauben, die in Öffnungen der Seitenteile 47, 48, des Mittelteils 49 und der Montageaufnahmeeinheit 52 befestigt sind. Die Befestigungselemente 521 und 523 benötigen aufgrund der benötigten Isolation zwischen den Seitenteilen 47, 48 und der Montageaufnahmeeinheit 52 eine zusätzliche Isolationsscheibe 450 zur kontaktlosen und dennoch festen Montage der einzelnen Teile 47, 48, 49.

Dadurch wird der Aufbau des Gleichrichters 40, 40A für die jeweils geforderte Anwendung sehr flexibel und unaufwändig realisierbar. Hierbei ist eine Gleichteileverwendung der Halbleitermodule 401 für den Schweißtransformator 30 mit oder ohne Polumschaltung bzw. Polaritätsumschaltung am Ausgang möglich.

Somit können bei den Gleichrichtern 40, 40A durch die Platzierung der Steckverbindung bzw. des Anschlussteckverbinders 402 an dem Treiber 403 für alle Transistoren 41 bis 44 die gleichen Transistoren bzw. Halbleitermodule 401, insbesondere MOSFET-Module, verwendet werden.

Außerdem können Transformatoren 30 mit Polumschaltung und Transformatoren 30 ohne Polumschaltung mit Gleichrichtern 40, 40A mit denselben Seitenteilen 47, 48 realisiert werden. In anderen Worten, für die Gleichrichter 40, 40A werden dieselben Teile unabhängig davon verwendet, ob Transformatoren 30 mit Polumschaltung und Transformatoren 30 ohne Polumschaltung mit den Gleichrichtern 40, 40A zu kombinieren sind.

Noch dazu sind die Transformatoren 30 mit Polumschaltung und die Transformatoren 30 ohne Polumschaltung mit der gleichen Treiberplatine 403 (mit Bestückvarianten) steuerbar, wie zuvor erwähnt.

Fig. 8 zeigt eine Schweißvorrichtung 3 mit einem Gleichrichter 400 gemäß einem dritten Ausführungsbeispiel. Die Schweißvorrichtung 3 ist insbesondere eine Widerstandsschweißvorrichtung. Die Schweißvorrichtung 3 ist in vielen Teilen auf die gleiche Weise aufgebaut, wie für die Schweißvorrichtung 2 gemäß dem vorangehenden Ausführungsbeispiel beschrieben. Die Bauteile 41, 42, 43, 44, die als die Module 401 und somit als Gleichteile ausgeführt sind, haben dabei mindestens einen Transistor, insbesondere jedoch bis zu ca. 50 Transistoren. Die Anzahl ist jedoch je nach Bedarf der jeweiligen Schweißanwendung beliebig wählbar. Bei allen Bauteilen 41, 42, 43, 44 sind die BODY-Dioden eingezeichnet.

Im Unterschied zur Schweißvorrichtung 2 gemäß den vorangehenden Ausführungsbeispielen sind bei der Schweißvorrichtung 3 gemäß dem vorliegenden Ausführungsbeispiel die Transistoren 41, 42, 43, 44 jeweils speziell als Metall-Oxid-Halbleiter-Feldeffekttransistoren (MOS-FET) ausgestaltet. Die Metall-Oxid-Halbleiter-Feldeffekttransistoren sind bei der Schweißvorrichtung 3 antiparallel geschaltet.

Fig. 8 zeigt die Variante mit Polumschaltung. Soll die Variante ohne Polumschaltung realisiert werden, werden nur die Transistoren 42, 44 benötigt, bei denen der Source-Anschluss S am Transformator 30 angeschlossen ist und der Drain-Anschluss an den jeweiligen Elektroden 11, 12 angeschlossen ist.

Wie in Fig. 8 gezeigt, ergibt sich eine Primärspannung U1 an der Primärseite des Schweißtransformators 30 aus einer Brückenschaltung 60 von Halbleiterschaltern 61, 62, 63, 64. Die Halbleiterschalter 61, 62, 63, 64 können insbesondere jeweils ein Bipolartransistor mit isolierter Gate-Elektrode (IGBT = Insulated-Gate Bipolar Transistor) eines Umrichters sein.

In der Schaltung 60 sind der erste Halbleiterschalter 61 und der zweite Halbleiterschalter 62 in Reihe geschaltet. Zudem sind der dritte Halbleiterschalter 63 und der vierte Halbleiterschalter 64 in Reihe geschaltet. Zwischen einem ersten Verbindungsknoten 71, der zwischen dem ersten und zweiten Halbleiterschalter 61, 62 angeordnet ist, und einem zweiten Verbindungsknoten 72, der zwischen dem dritten und vierten Halbleiterschalter 63, 64 angeordnet ist, bildet sich die Primärspannung U1 an der Primärseite des Schweißtransformators 30 aus.

An der Sekundärseite des Schweißtransformators 30 liegt eine erste Sekundärspannung U21 zwischen dem ersten und zweiten Ausgang 31, 32 des Schweißtransformators 30 an. Außerdem liegt eine zweite Sekundärspannung U22 zwischen dem zweiten und dritten Ausgang 32, 33 des Schweißtransformators 30 an. Die erste Sekundärspannung U21 und die zweite Sekundärspannung U22 bilden nach der Gleichrichtung durch den Gleichrichter 400 die Schweißspannung U23 in vorgewählter Polung.

Der Schweißtransformator 30 wandelt die Primärspannung U1 in die erste und zweite Sekundärspannung U21, U22. Hierbei ist die Summe der Sekundärspannungen U21, U22 kleiner als der Wert der Primärspannung U1. Zudem wandelt der Schweißtransformator 30 einen Primärstrom I1 auf der Primärseite des Schweißtransformators 30 in den Sekundärstrom I2 auf der Sekundärseite des Schweißtransformators 30 um. Der Sekundärstrom I2, der auch als Schweißstrom bezeichnet werden kann, hat einen höheren Wert als der Primärstrom I1.

Die in Fig. 8 gezeigte Schaltung der Schweißvorrichtung 3 wird von der Steuereinrichtung 20 auf die gleiche Weise geschaltet, wie in Bezug auf das vorangehende Ausführungsbeispiel beschrieben.

Die Schweißvorrichtung 3 kann anstelle der Schweißvorrichtung 2 gemäß dem vorangehenden Ausführungsbeispiel bei der Anlage 1 gemäß dem vorangehenden Ausführungsbeispiel eingesetzt werden. Insbesondere ist der Gleichrichter 400 auf die gleiche Weise ausgestaltbar, wie in Bezug auf das erste und zweite Ausführungsbeispiel beschrieben.

Auch die Schweißvorrichtung 3 kann besonders vorteilhaft bei Blechkombinationen zum Einsatz kommen, bei welchen es bei einer Schweißzange zum unterschiedlich hohen Abbrand der Schweißelektroden kommt. Außerdem kann die Schweißvorrichtung 3 besonders vorteilhaft beim Schweißen von Kettengliedern und beim Schweißen von Heizkörpern verwendet werden.

Somit ist es möglich, dass von den mindestens zwei Halbleitermodulen 401 zwei Halbleitermodule 401 zusammen zwischen einem der Seitenteile 47 und dem Mittelteil 49 angeordnet sind und als Reihenschaltung aus zwei Transistoren 41, 42 zwischen das Schweißwerkzeug 10 und einen Ausgang 31 des Schweißtransformators 30 geschaltet sind und zwei andere Halbleitermodule 401 zusammen zwischen dem anderen der Seitenteile 48 und dem Mittelteil 49 angeordnet sind und als Reihenschaltung aus zwei Transistoren oder 43, 44 zwischen das Schweißwerkzeug 10 und einen anderen Ausgang 33 des Schweißtransformators 30 geschaltet sind. Dadurch wird eine Polumschaltung des Transformators 30 möglich, wie zuvor in Bezug auf das erste Ausführungsbeispiel beschrieben. Ist keine Polumschaltung des Transformators 30 gefordert, können die mindestens zwei Halbleitermodule jeweils einzeln zwischen einem der Seitenteile 47, 48 und dem Mittelteil 49 angeordnet sein und zwischen das Schweißwerkzeug 10 und einen Ausgang des Schweißtransformators 30 geschaltet sein.

Außerdem ist es möglich, dass der Schweißtransformator 30 mindestens zwei bevorzugt jedoch drei Ausgänge hat, wobei an zwei der Ausgänge jeweils eine Reihenschaltung aus zwei Transistoren 41, 42; 43, 44 angeordnet ist, die Enden der Reihenschaltungen miteinander verbunden sind und mit dem bevorzugt dritten Ausgang des Schweißtransformators 30 an oder vor das Schweißwerkzeug 10 geschaltet sind. Es ist zudem möglich, dass die Reihenschaltung der Transistoren 41, 42; 43, 44 nur aus einem oder mehreren gleichgepolten parallelgeschalteten Transistoren besteht. Zudem ist es möglich, dass für die Variante ohne Polumschaltung, wie in Bezug auf Fig. 6 und Fig. 7 beschrieben, an zwei der Ausgänge 31, 33 jeweils nur ein aus einem Transistor besteht.

Alle zuvor beschriebenen Ausgestaltungen der Anlage 1, der Schweißvorrichtungen 2, 3 und des von diesen durchgeführten Verfahrens zum Widerstandsschweißen können einzeln oder in allen möglichen Kombinationen im Rahmen der angehängten Ansprüche Verwendung finden. Insbesondere können alle Merkmale und/oder Funktionen der zuvor beschriebenen Ausführungsbeispiele im Rahmen der Ansprüche beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Transistoren 41, 42, 43, 44 können alternativ Bipolartransistoren sein, wobei jedoch die Ausführung als Metall-Oxid-Halbleiter-Feldeffekttransistoren (MOS-FET) bevorzugt wird.

Der Schweißtransformator 30 kann aus einer Parallelschaltung von zwei Transformatoren aufgebaut sein.

Möglicherweise sind bis zu vier Halbleitermodule 401 zwischen einem Seitenteil 47, 48 und dem Mittelteil 49 vorgesehen. Selbstverständlich kann die Anzahl der Halbleitermodule 401 je nach Bedarf und Ausgestaltung größer sein. Zudem sind für spezielle Anwendungen 3 oder 5 oder mehr Halbleitermodule 401 zwischen einem Seitenteil 47, 48 und dem Mittelteil 49 anordenbar.

Die Anlage 1 weist möglicherweise anstelle des von der Vorrichtung 50 geführten Schweißwerkzeugs 10 ein Handwerkzeug auf. Die Vorrichtung 50 kann alternativ derart ausgestaltet sein, dass das Schweißwerkzeug 10 ein handgeführtes Werkzeug ist.

Zusätzlich zu einer der genannten Ausführungsvarianten für das Schweißwerkzeug 10 ist es denkbar, dass die Anlage 1 mindestens ein weiteres Werkzeug aufweist, wie ein Schraub-, Bohr- oder Fräswerkzeug, oder Nietwerkzeug oder Schneidwerkzeug oder Toxwerkzeug oder Stanzwerkzeug.

## Patentansprüche

1. Gleichrichter (40; 40A, 400) für einen Schweißtransformator (30) einer Schweißvorrichtung (2; 3) zum Schweißen von mindestens einem Bauteil (5, 6), mit
einem ersten Seitenteil (47) zur elektrisch leitfähigen Verbindung mit dem Schweißtransformator (30),
einem zweiten Seitenteil (48 zur elektrisch leitfähigen Verbindung mit dem Schweißtransformator (30),
einem Mittelteil (49), das zwischen dem ersten und zweiten Seitenteil (47, 48) für einen Stromausgang in Richtung einer Schweißelektrode (11) der Schweißvorrichtung (2; 3) angeordnet und ausgestaltet ist, und
mindestens zwei Halbleitermodulen (401), die zwischen den Seitenteilen (47, 48) und dem Mittelteil (49) angeordnet sind und zwischen ein Schweißwerkzeug (10) der Schweißvorrichtung (2; 3) und einen Ausgang des Schweißtransformators (30) schaltbar sind,
**dadurch gekennzeichnet, dass**
die mindestens zwei Halbleitermodule (401) als Gleichteile ausgestaltet sind, deren Direktsteckverbinder (4013) seitlich an dem Halbleitermodul (401) angeordnet ist, so dass bei einer Anordnung von zwei Halbleitermodulen (401) Rücken an Rücken in einer Reihe nebeneinander, die Direktsteckverbinder (4013) in einer Richtung quer zu der Reihe nebeneinander angeordnet sind zur Verbindung der mindestens zwei Halbleitermodule (401) mit je einem Steckverbinder (402) einer Treiberplatine (403) für eine Stromversorgung der mindestens zwei Halbleitermodule (401).

2. Gleichrichter (40; 40A, 400) nach Anspruch 1,
wobei die mindestens zwei Halbleitermodule (401) entweder zusammen zwischen einem der Seitenteile (47) und dem Mittelteil (49) angeordnet sind und als Reihenschaltung aus zwei Transistoren (41, 42; 43, 44) zwischen das Schweißwerkzeug (10) und einen Ausgang des Schweißtransformators (30) geschaltet sind, oder jeweils einzeln zwischen einem der Seitenteile (47) und dem Mittelteil (49) angeordnet sind und zwischen das Schweißwerkzeug (10) und einen Ausgang des Schweißtransformators (30) geschaltet sind.

3. Gleichrichter (40; 40A, 400) nach Anspruch 1 oder 2,
wobei die mindestens zwei Halbleitermodule (401) jeweils mindestens ein Halbleiterbauelement (4015) aufweisen, das mindestens einen Transistor aufweist, und
wobei die Polarität des einen Transistors (42; 44) der Reihenschaltung gegenüber der Polarität des anderen Transistors (41; 43) der Reihenschaltung gedreht ist, um im Falle der Reihenschaltung an dem Schweißtransformator (30) eine polaritätsumschaltbare Schweißspannung (U23) und einen polaritätsumschaltbaren Schweißstrom (I2) zu realisieren.

4. Gleichrichter (40; 40A, 400) nach Anspruch 3, wobei der Transistor (42; 44) mit der gedrehten Polarität über das Mittelteil (49) und eine Montageaufnahmeeinheit (51) zur Verbindung mit dem Schweißwerkzeug (10) vorgesehen ist.

5. Gleichrichter (40; 40A, 400) nach Anspruch 3 oder 4, wobei die Transistoren (41, 42; 43, 44) Metall-Oxid-Halbleiter-Feldeffekttransistoren sind.

6. Gleichrichter (40; 40A, 400) nach einem der vorangehenden Ansprüche,
wobei jedes der mindestens zwei Halbleitermodule (401) eine Basisplatte (4011) und eine Deckelplatte (4012) aufweisen, die elektronisch und mechanisch miteinander verbunden sind, und jedes Halbleitermodul (401) einen Direktsteckverbinder (4013) aufweist, der seitlich aus dem Halbleitermodul (401) auskragt.

7. Gleichrichter (40; 40A, 400) nach einem der vorangehenden Ansprüche, wobei das erste Seitenteil (47) und das zweite Seitenteil (48) derart asymmetrisch ausgestaltet sind, dass ein Austausch der Anordnung der Seitenteile (47, 48) relativ zum Mittelteil (49) die Anzahl der Halbleitermodule (401) verändert, die zwischen einem der Seitenteile (47, 48) und dem Mittelteil (49) einspannbar sind.

8. Gleichrichter (40; 40A, 400) nach einem der vorangehenden Ansprüche,
zudem mit Befestigungselementen (471, 481) zur Befestigung der Seitenteile (47, 48) am Schweißtransformator (30),
wobei die Befestigungselemente (471, 481) an den Seitenteilen (47, 48) derart vorgesehen sind, dass dieselben Befestigungsstellen am Schweißtransformator (30) unabhängig davon verwendbar sind, wie die Seitenteile (47, 48) relativ zum Mittelteil (49) angeordnet sind, damit ein polaritätsumschaltbarer Schweißstrom (I2) realisierbar ist oder nicht.

9. Schweißvorrichtung (2; 3), mit
einem Schweißwerkzeug (10) mit mindestens einer Schweißelektrode (11, 12), welche zum Schweißen mit dem mindestens einen Bauteil (5, 6) zu kontaktieren ist,
mindestens einem Schweißtransformator (30) zum Zuführen eines elektrischen Stroms zu dem Schweißwerkzeug (10) beim Schweißen des mindestens einen Bauteils (5, 6), und
mindestens einem Gleichrichter (40; 40A, 400) nach einem der vorangehenden Ansprüche,
wobei der mindestens eine Gleichrichter (40; 40A, 400) mit dem mindestens einen Schweißtransformator (30) verbunden ist.

10. Schweißvorrichtung (2; 3) nach Anspruch 9, wobei der Schweißtransformator (30) zwei Ausgänge (31, 33) hat, an welchen jeweils eine Reihenschaltung aus zwei Transistoren (41, 42; 43, 44) vor das Schweißwerkzeug (10) geschaltet ist.

11. Schweißvorrichtung (2; 3) nach Anspruch 9 oder 10, zudem mit einer Steuereinrichtung (20) zum negativ leitend Einschalten mindestens eines der in Reihe geschalteten Transistoren (41, 42, 43, 44) im Synchronbetrieb bei elektrischem Strom.

12. Schweißvorrichtung (2; 3) nach einem der Ansprüche 9 bis 11, wobei das Schweißwerkzeug (10) eine Schweißzange mit zwei Schweißelektroden (11, 12) ist, zwischen welchen das mindestens eine Bauteil (5, 6) beim Schweißen angeordnet ist.

13. Anlage (1) zur Behandlung von Gegenständen (4), mit
einer Schweißvorrichtung (2; 3) nach einem der Ansprüche 9 bis 12,
wobei die Schweißvorrichtung (2; 3) zum Schweißen von mindestens einem Bauteil (5, 6) für mindestens einen der Gegenstände (4) vorgesehen ist.

14. Anlage (1) nach Anspruch 13, wobei die Anlage (1) zur Fertigung von Fahrzeugrohkarossen oder Heizkörpern oder Ketten als Gegenstände (4) ausgestaltet ist.

15. Verfahren zum Herstellen eines Gleichrichters (40; 40A, 400) für einen Schweißtransformator (30) einer Schweißvorrichtung (2; 3), wobei das Verfahren die Schritte aufweist
Anordnen eines Mittelteils (49) zwischen einem ersten und zweiten Seitenteil (47, 48) und von mindestens je einem Halbleitermodul (401) zwischen den Seitenteilen (47, 48) und dem Mittelteil (49), wobei das erste und zweite Seitenteil (47) jeweils zur elektrisch leitfähigen Verbindung mit dem Schweißtransformator (30) dienen, wobei das Mittelteil (49) Teil des Stromausgangs in Richtung einer Schweißelektrode (11) der Schweißvorrichtung (2; 3) ist, **dadurch gekennzeichnet, dass** die mindestens zwei Halbleitermodule (401) als Gleichteile ausgestaltet sind, deren Direktsteckverbinder (4013) seitlich an dem Halbleitermodul (401) angeordnet ist, so dass bei einer Anordnung von zwei Halbleitermodulen (401) Rücken an Rücken in einer Reihe nebeneinander, die Direktsteckverbinder (4013) in einer Richtung quer zu der Reihe nebeneinander angeordnet sind zur Verbindung der mindestens zwei Halbleitermodule (401) mit je einem Steckverbinder (402) einer Treiberplatine (403) für eine Stromversorgung der mindestens zwei Halbleitermodule (401), und
elektrisch Verbinden der mindestens zwei Halbleitermodule (401) zwischen ein Schweißwerkzeug (10) und einen Ausgang des Schweißtransformators (30).

## Claims

1. Rectifier (40; 40A, 400) for a welding transformer (30) of a welding apparatus (2; 3) for welding at least one component part (5, 6), comprising a first side part (47) for electrically conductive connection to the welding transformer (30),
a second side part (48) for electrically conductive connection to the welding transformer (30),
a central part (49) arranged and configured between the first and second side parts (47, 48) for a current output in the direction of a welding electrode (11) of the welding apparatus (2; 3) and at least two semiconductor modules (401) which are arranged between the side parts (47, 48) and the central part (49) and are switchable between a welding tool (10) of the welding apparatus (2; 3) and an output of the welding transformer (30), **characterized in that**
the at least two semiconductor modules (401) are configured as identical parts, the direct plug connector (4013) of which is arranged laterally on the semiconductor module (401), such that when two semiconductor modules (401) are arranged back to back in a series next to one another, the direct plug connectors (4013) are arranged next to one another in a direction transversely with respect to the series for the purpose of connecting the at least two semiconductor modules (401) to a respective plug connector (402) of a driver circuit board (403) for supplying the at least two semiconductor modules (401) with current.

2. Rectifier (40; 40A, 400) according to Claim 1,
wherein either the at least two semiconductor modules (401) are arranged together between one of the side parts (47) and the central part (49) and are switched as a series circuit comprising two transistors (41, 42; 43, 44) between the welding tool (10) and an output of the welding transformer (30), or the at least two semiconductor modules (401) are each arranged individually between one of the side parts (47) and the central part (49) and are switched between the welding tool (10) and an output of the welding transformer (30).

3. Rectifier (40; 40A, 400) according to Claim 1 or 2, wherein the at least two semiconductor modules (401) each have at least one semiconductor component (4015) having at least one transistor, and wherein the polarity of one transistor (42; 44) of the series circuit is rotated relative to the polarity of the other transistor (41; 43) of the series circuit in order to realize a polarity-switchable welding voltage (U23) and a polarity-switchable welding current (12) at the welding transformer (30) in the case of the series circuit.

4. Rectifier (40; 40A, 400) according to Claim 3, wherein the transistor (42; 44) having the rotated polarity is provided for connection to the welding tool (10) by way of the central part (49) and a mounting receptacle unit (51).

5. Rectifier (40; 40A, 400) according to Claim 3 or 4, wherein the transistors (41, 42; 43, 44) are metal oxide semiconductor field effect transistors.

6. Rectifier (40; 40A, 400) according to any of the preceding claims,
wherein each of the at least two semiconductor modules (401) has a baseplate (4011) and a cover plate (4012), which are electronically and mechanically connected to one another, and each semiconductor module (401) has a direct plug connector (4013) protruding laterally from the semiconductor module (401).

7. Rectifier (40; 40A, 400) according to any of the preceding claims, wherein the first side part (47) and the second side part (48) are configured asymmetrically in such a way that an exchange of the arrangement of the side parts (47, 48) relative to the central part (49) alters the number of semiconductor modules (401) which are able to be clamped in between one of the side parts (47, 48) and the central part (49).

8. Rectifier (40; 40A, 400) according to any of the preceding claims,
additionally comprising securing elements (471, 481) for securing the side parts (47, 48) to the welding transformer (30),
wherein the securing elements (471, 481) are provided on the side parts (47, 48) in such a way that the same securing points on the welding transformer (30) are usable irrespective of how the side parts (47, 48) are arranged relative to the central part (49), in order that a polarity-switchable welding current (12) is or is not realizable.

9. Welding apparatus (2; 3), comprising
a welding tool (10) comprising at least one welding electrode (11, 12) which is to be contacted with the at least one component part (5, 6) for welding purposes,
at least one welding transformer (30) for feeding an electric current to the welding tool (10) during the welding of the at least one component part (5, 6), and
at least one rectifier (40; 40A, 400) according to any of the preceding claims,
wherein the at least one rectifier (40; 40A, 400) is connected to the at least one welding transformer (30) .

10. Welding apparatus (2; 3) according to Claim 9, wherein the welding transformer (30) has two outputs (31, 33), at each of which a series circuit comprising two transistors (41, 42; 43, 44) is connected upstream of the welding tool (10).

11. Welding apparatus (2; 3) according to Claim 9 or 10, additionally comprising a control device (20) for negatively conductively switching on at least one of the series-connected transistors (41, 42, 43, 44) in synchronous operation with electric current.

12. Welding apparatus (2; 3) according to any of Claims 9 to 11, wherein the welding tool (10) is a welding gun comprising two welding electrodes (11, 12), between which the at least one component part (5, 6) is arranged during welding.

13. Installation (1) for the treatment of objects (4), comprising
a welding apparatus (2; 3) according to any of Claims 9 to 12,
wherein the welding apparatus (2; 3) is provided for welding at least one component part (5, 6) for at least one of the objects (4).

14. Installation (1) according to Claim 13, wherein the installation (1) is configured for manufacturing vehicle bodies-in-white or radiators or chains as objects (4).

15. Method for producing a rectifier (40; 40A, 400) for a welding transformer (30) of a welding apparatus (2; 3), wherein the method has the steps of arranging a central part (49) between a first and a second side part (47, 48) and at least one semiconductor module (401) between each of the side parts (47, 48) and the central part (49), wherein the first and second side parts (47) each serve for electrically conductive connection to the welding transformer (30), wherein the central part (49) is part of the current output in the direction of a welding electrode (11) of the welding apparatus (2; 3), **characterized in that**
the at least two semiconductor modules (401) are configured as identical parts, the direct plug connector (4013) of which is arranged laterally on the semiconductor module (401), such that when two semiconductor modules (401) are arranged back to back in a series next to one another, the direct plug connectors (4013) are arranged next to one another in a direction transversely with respect to the series for the purpose of connecting the at least two semiconductor modules (401) to a respective plug connector (402) of a driver circuit board (403) for supplying the at least two semiconductor modules (401) with current, and electrically connecting the at least two semiconductor modules (401) between a welding tool (10) and an output of the welding transformer (30).

## Revendications

1. Redresseur (40 ; 40A, 400) pour un transformateur de soudage (30) d'un dispositif de soudage (2 ; 3) permettant de souder au moins un composant (5, 6), comprenant
une première partie latérale (47) pour une liaison électriquement conductrice au transformateur de soudage (30),
une deuxième partie latérale (48) pour une liaison électriquement conductrice au transformateur de soudage (30),
une partie centrale (49) qui est disposée et configurée entre la première et la deuxième partie latérale (47, 48) pour une sortie de courant en direction d'une électrode de soudage (11) du dispositif de soudage (2 ; 3), et
au moins deux modules à semi-conducteur (401) qui sont disposés entre les parties latérales (47, 48) et la partie centrale (49) et peuvent être connectés entre un outil de soudage (10) du dispositif de soudage (2 ; 3) et une sortie du transformateur de soudage (30),
**caractérisé en ce que** les au moins deux modules à semi-conducteur (401) sont configurés comme des composants invariants dont les connecteurs encartables (4013) sont disposés latéralement sur le module à semi-conducteur (401) de sorte que pour un agencement de deux modules à semi-conducteur (401) dos à dos sur une rangée l'un à côté de l'autre, les connecteurs encartables (4013) sont disposés dans une direction transversalement à la rangée l'un à côté de l'autre pour relier les au moins deux modules à semi-conducteur (401) respectivement à un connecteur enfichable (402) d'une carte pilote (403) pour une alimentation en courant des au moins deux modules à semi-conducteur (401) .

2. Redresseur (40 ; 40A, 400) selon la revendication 1, dans lequel les au moins deux modules à semi-conducteur (401) sont soit disposés ensemble entre l'une des parties latérales (47) et la partie centrale (49) et connectés comme un montage série de deux transistors (41, 42 ; 43, 44) entre l'outil de soudage (10) et une sortie du transformateur de soudage (30), soit disposés respectivement individuellement entre l'une des parties latérales (47) et la partie centrale (49) et connectés entre l'outil de soudage (10) et une sortie du transformateur de soudage (30).

3. Redresseur (40 ; 40A, 400) selon la revendication 1 ou 2,
dans lequel les au moins deux modules à semi-conducteur (401) présentent respectivement au moins un composant à semi-conducteur (4015) qui présente au moins un transistor, et
dans lequel la polarité dudit un transistor (42 ; 44) du montage série est inversée par rapport à la polarité de l'autre transistor (41 ; 43) du montage série afin de réaliser dans le cas du montage série sur le transformateur de soudage (30) une tension de soudage (U23) à polarité réversible et un courant de soudage (12) à polarité réversible.

4. Redresseur (40 ; 40A, 400) selon la revendication 3, dans lequel le transistor (42 ; 44) est muni de la polarité inversée par l'intermédiaire de la partie centrale (49), et une unité de logement de montage (51) est prévue pour une liaison à l'outil de soudage (10).

5. Redresseur (40 ; 40A, 400) selon la revendication 3 ou 4, dans lequel les transistors (41, 42 ; 43, 44) sont des transistors à effet de champ de type métal-oxyde-semi-conducteur.

6. Redresseur (40 ; 40A, 400) selon l'une quelconque des revendications précédentes, dans lequel chacun des au moins deux modules à semi-conducteur (401) présente une plaque de base (4011) et une plaque de recouvrement (4012) qui sont reliées ensemble de manière électronique et mécanique, et chaque module à semi-conducteur (401) présente un connecteur encartable (4013) qui fait saillie latéralement du module à semi-conducteur (401).

7. Redresseur (40 ; 40A, 400) selon l'une quelconque des revendications précédentes, dans lequel la première partie latérale (47) et la deuxième partie latérale (48) sont configurées de manière asymétrique de telle sorte qu'un échange de la disposition des parties latérales (47, 48) par rapport à la partie centrale (49) modifie le nombre des modules à semi-conducteur (401) qui peuvent être encastrés entre l'une des parties latérales (47, 48) et la partie centrale (49).

8. Redresseur (40 ; 40A, 400) selon l'une quelconque des revendications précédentes,
comprenant en outre des éléments de fixation (471, 481) pour fixer les parties latérales (47, 48) au transformateur de soudage (30),
dans lequel les éléments de fixation (471, 481) sont prévus sur les parties latérales (47, 48) de telle sorte que les mêmes points de fixation sur le transformateur de soudage (30) peuvent être utilisés indépendamment de la disposition des parties latérales (47, 48) par rapport à la partie centrale (49) afin de permettre de réaliser ou non un courant de soudage (12) à polarité réversible.

9. Dispositif de soudage (2 ; 3), comprenant
un outil de soudage (10) muni d'au moins une électrode de soudage (11, 12) qui doit être mise en contact avec ledit au moins un composant (5, 6) pour le soudage,
au moins un transformateur de soudage (30) pour amener un courant électrique à l'outil de soudage (10) lors du soudage du au moins un composant (5, 6), et
au moins un redresseur (40 ; 40A, 400) selon l'une quelconque des revendications précédentes,
dans lequel ledit au moins un redresseur (40 ; 40A, 400) est relié audit au moins un transformateur de soudage (30).

10. Dispositif de soudage (2 ; 3) selon la revendication 9, dans lequel le transformateur de soudage (30) présente deux sorties (31, 33) auxquelles respectivement un circuit série composé de deux transistors (41, 42 ; 43, 44) est monté devant l'outil de soudage (10).

11. Dispositif de soudage (2 ; 3) selon la revendication 9 ou 10, comprenant en outre un dispositif de commande (20) pour la mise sous tension à conduction négative d'au moins l'un des transistors connectés en série (41, 42, 43, 44) en fonctionnement synchrone sous courant électrique.

12. Dispositif de soudage (2 ; 3) selon l'une quelconque des revendications 9 à 11, dans lequel l'outil de soudage (10) est une pince à souder munie de deux électrodes de soudage (11, 12) entre lesquelles ledit au moins un composant (5, 6) est disposé lors du soudage.

13. Installation (1) de traitement d'objets (4), comprenant
un dispositif de soudage (2 ; 3) selon l'une quelconque des revendications 9 à 12,
dans laquelle le dispositif de soudage (2 ; 3) est prévu pour souder au moins un composant (5, 6) pour au moins l'un des objets (4).

14. Installation (1) selon la revendication 13, l'installation (1) étant configurée pour fabriquer comme objets (4) des caisses en blanc de véhicule ou des corps de chauffe ou des chaînes.

15. Procédé de fabrication d'un redresseur (40 ; 40A, 400) pour un transformateur de soudage (30) d'un dispositif de soudage (2 ; 3), le procédé présentant les étapes suivantes consistant à
disposer une partie centrale (49) entre une première et une deuxième partie latérale (47, 48) et au moins respectivement un module à semi-conducteur (401) entre les parties latérales (47, 48) et la partie centrale (49), dans lequel la première et la deuxième partie latérale (47) servent respectivement à la liaison électriquement conductrice au transformateur de soudage (30), dans lequel la partie centrale (49) fait partie de la sortie de courant en direction d'une électrode de soudage (11) du dispositif de soudage (2 ; 3),
**caractérisé en ce que** les au moins deux modules à semi-conducteur (401) sont configurés comme des composants invariants dont les connecteurs encartables (4013) sont disposés latéralement sur le module à semi-conducteur (401) de sorte que pour un agencement de deux modules à semi-conducteur (401) dos à dos sur une rangée l'un à côté de l'autre, les connecteurs encartables (4013) sont disposés dans une direction transversalement à la rangée l'un à côté de l'autre pour relier les au moins deux modules à semi-conducteur (401) respectivement à un connecteur enfichable (402) d'une carte pilote (403) pour une alimentation en courant des au moins deux modules à semi-conducteur (401),
relier électriquement les au moins deux modules à semi-conducteur (401) entre un outil de soudage (10) et une sortie du transformateur de soudage (30).
